# EUROPEAN PATENT APPLICATION

(11) **EP 1 758 360 A2**
(43) Date of publication of application: **28.02.2007**
(21) Application number: 06254235.2
(22) Date of filing: 11.08.2006
(51) Int. Cl.: H04M 3/46, H04M 7/00, H04L 12/66

(54) **Proxy independent hunt group function in a packet based network**

(30) Priority: 26.08.2005 US 213602
(71) Applicant: STMicroelectronics Asia Pacific Pte Ltd., Singapore 554574 (SG)
(72) Inventor: Malhotra, Tanu, West Coast Drive, Singapore 127992 (SG); Kumar, Krishna, Anoop, Singapore 678265 (SG)
(74) Representative: Style, Kelda Camilla Karen

(57) **Abstract**

A system and method are provided for implementing the Hunt group function without the necessity of using any proxy functionalities. The Hunt group function can be independent of the signaling protocol being used by VoIP terminals. Consequently, there is no need of any special or proprietary signaling protocol to be implemented. Instead of registering all members or all VoIP nodes belonging to a Hunt group to a registration entity, only one pre-configured VoIP node belonging to the particular Hunt group needs to be registered. Likewise, instead of all members or VoIP nodes in the Hunt group registering with a registration entity and having a Hunt group number in addition to their usual peer-to-peer numbers, only one pre-configured VoIP node in the Hunt group would perform the registration and be registered with the Hunt group number. All incoming calls to the Hunt group will be directed by the gateway to the pre-configured VoIP node first. A method of the present embodiment may be performed by the gateway to ensure that the incoming call is forwarded to a VoIP node within the Hunt group.

## Description

### Field of the Invention

This disclosure relates generally to Voice over Internet Protocol (VoIP) protocols and technology. In particular, this disclosure relates to a system and method for implementing proxy independent hunt group function in a VoIP environment without modification to existing available protocols.

### Background of the Invention

Many features available in conventional private branch exchange (PBX or PABX) phone systems are fast becoming available in VoIP phone systems as well. One of these features which may be desirable in industries such as help-desk services is: Line group features.

Line Group feature is useful where several endpoints with their own separate extensions carry out a similar service function such as in a help-desk scenario. Calls to a line group number are distributed among the several extensions which make up the members of the Line group. Line group members may be called either in a given sequence or according to a predetermined algorithm to ensure all members receive an equal number of calls. When a specific extension has been selected, the endpoint of that extension will ring until answered or until a predetermined period of time has passed.

Depending on the distribution of signaling by a central communication controller to the individual group endpoints, three fundamental line group types are distinguished. If a call directed from a calling endpoint is signaled to all the members of the group endpoints simultaneously then a Pickup group function is involved. If the incoming call is signaled to a single group endpoint and thereafter respectively signaled to the next endpoint because the first group endpoint does not respond within a particular time-period, a Hunting group function is involved. If a call directed to a group address is signaled specifically to a group endpoint by the central controller on the basis of an automatic call distribution function, this is called Automatic Call Distribution (ACD).

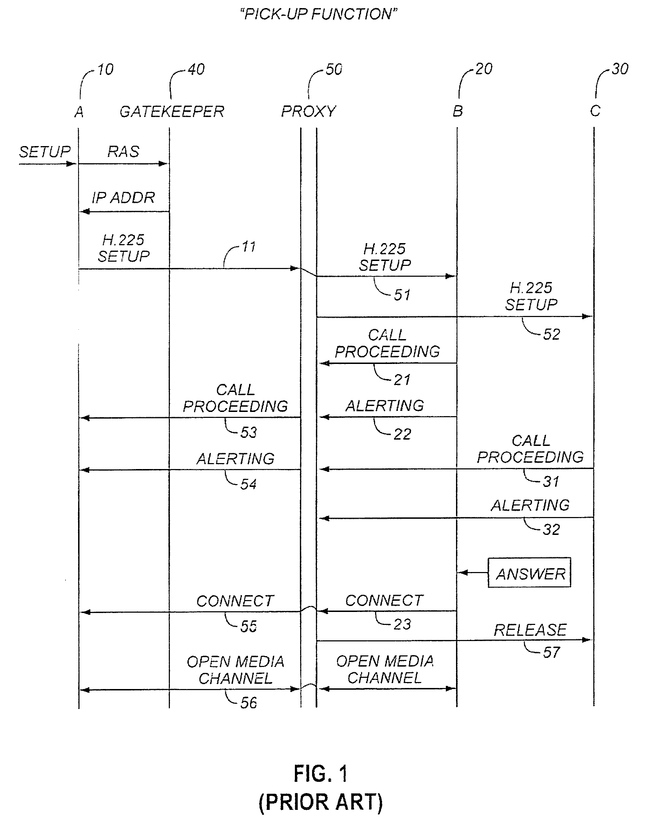

Referring to FIG. 1, a message flow diagram of a prior art implementation using H.323 protocol of a Pickup group function where a Proxy 50 acts as a central controller is shown. The called party is a group comprising of Endpoints B 20 and C 30. The group has a group alias address that is converted into a group transport address known to the proxy 50.

The calling Endpoint A 10 sends a H.225 Setup message 11 to the group transport address via the proxy 50. The proxy 50 forwards this message to all the members in the group. In the H.225 Setup message 11, the contact transport address responding to a Q.931 message would be the IP address and port number used by the proxy 50. Thus, on receiving the H.225 Setup message 11, the group members will respond with a Call Proceeding 21, 31 and Alerting 22, 32 message to the proxy 50.

The proxy 50 may receive several Call Proceeding 21, 31 and Alerting 22, 32 messages at one time. However, not all the messages can be relayed to the Endpoint A 10. Only the first response by a first of the members is relayed to endpoint A 10 while the rest of the responses are ignored. At this stage, all the phones that are members of the Pickup Group play a power ring. If the call is answered, by endpoint B 20 in the illustrated case, the endpoint sends a CONNECT 23 message to the proxy 50. And the proxy 50 relays it forward to Endpoint A 10. If more than one endpoint answers the call, then the proxy 50 relays the first received CONNECT 23 message and ignores the rest of them. The endpoint that answers the call first, Endpoint B 20 in the illustrated case, opens the logical channels and a complete connection is established between Endpoint A 10 and Endpoint B 20. The other endpoints in the group are sent a Release 57 message from the proxy 50 to disconnect the call.

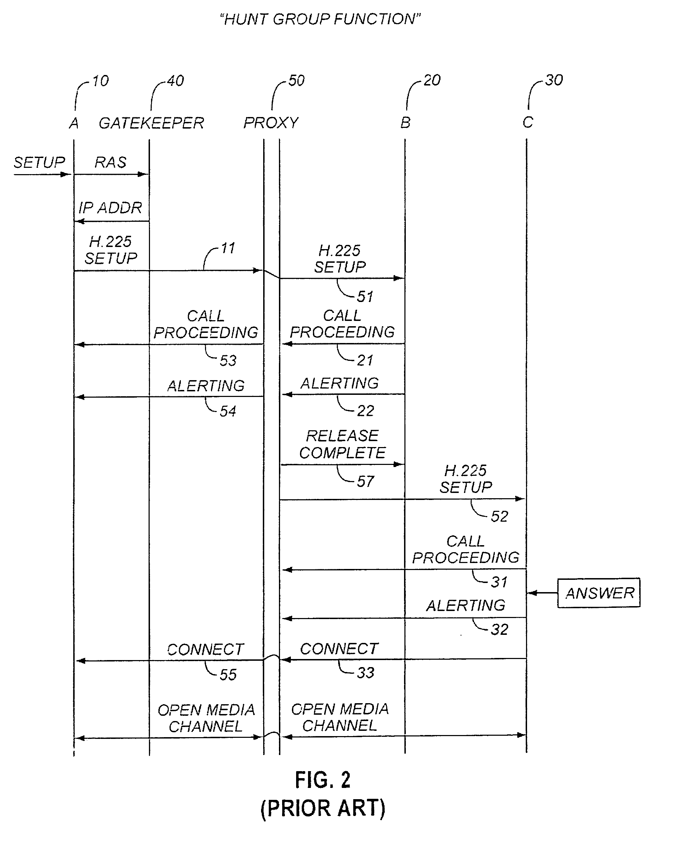

Referring to FIG. 2 a message flow diagram of a prior art implementation using H.323 protocol of a Hunt group function where the Proxy 50 acts as a central controller is shown. In this case, the H.225 Setup message 11 is not sent to all the endpoints in the group. Rather the H.225 Setup message 11 is sent to the group members one by one.

In the present example of FIG. 2, the proxy 50 relays the H.225 Setup message 11 received from Endpoint A 10, first to Endpoint B 20. Endpoint B 20 on receiving the H.225 Setup message 11, responds with Call Proceeding 21 and Alerting 22 message which is relayed forward by the proxy 50 to Endpoint A 10. If at this stage Endpoint B 20 is busy or do not wish to attend the call, then after a predetermined period of time or time-out, the proxy 50 will release the call with Endpoint B 20 ReleaseComplete message 57 and will forward the H.225 Setup message 52 to the next member in the group, Endpoint C 30 in the illustrated case. Endpoint C 30 on receiving the H.225 Setup message 52 will also respond with Call Proceeding 31 and Alerting 32 messages. But this time, the proxy 50 will not relay these messages to Endpoint A 10 as these messages have already been received by Endpoint A 10 as responses from Endpoint B 20. If any endpoint answers the call, in the illustrated case Endpoint C 30, then CONNECT 33 message is sent via the proxy 50 to Endpoint A 10. On receiving the CONNECT message 55, media channels are opened and the call is established.

As is evident in FIG. 2, the prior art implementation disadvantageously requires the presence of a central call controller or the proxy 50 to implement Hunt group functionality.

Existing standards packet based network protocols (e.g., ITU-T standard for H.323 and IETF RFC 3261 for SIP) support direct peer-to-peer communications between VoIP endpoints without using a central controller or proxy.

As such, there is an apparent need for a system and method for implementing proxy independent hunt group function in a VoIP environment without modification to existing available protocols which overcomes or at least alleviates the drawbacks of the prior art systems.

### Brief Description of the Drawings

Embodiments of the present invention will now be more fully described, by way of example, with reference to the drawings of which:

FIG. 1 illustrates a message flow diagram of a prior art implementation using H.323 protocol of a Pickup group function where a Proxy acts as a central controller for relaying data packets;

FIG. 2 illustrates a message flow diagram of a prior art implementation using H.323 protocol of a Hunting group function where a Proxy acts as a central controller for relaying data packets;

FIG. 3 illustrates a block diagram of a system in accordance with an embodiment of the present invention;

FIG. 4 illustrates a flow chart illustrating a method in accordance with an embodiment of the present invention;

FIG. 5 illustrates a flow chart illustrating the step of forwarding incoming calls to the Recording system of FIG. 4;

FIG. 6 illustrates a message flow diagram of Hunt group function in accordance with an embodiment of the present invention for H.323 protocol;

FIG. 7 illustrates a message flow diagram of Hunt group function in accordance with an embodiment of the present invention for SIP protocol;

FIG. 8 illustrates a single processor or multi processor system with voice over internet protocol capabilities in accordance with some embodiments of the present invention.

### Detailed Description

In the following description, details are provided to describe the preferred embodiments of the invention. It shall be apparent to one skilled in the art, however, that the embodiments may be practiced without such details. Some of these details may not be described at length so as not to obscure the preferred embodiments.

This disclosure teaches a system and method for implementing proxy independent hunt group function in a VoIP environment without requiring modifications to existing standard protocols. When the nodes are not members of the hunt group, they can still make a normal peer-to-peer outgoing call and receive a normal peer-to-peer incoming call. A normal peer-to-peer call refers to the incoming VoIP call destined to a VoIP node that is not a member of the hunt group. Initiating the outgoing call is independent of whether the VoIP node is a member of the hunt group.

Accordingly, in one aspect, some embodiments provide a method for implementing Hunt group function among a plurality of gateways, each of the plurality of gateways coupled to at least one VoIP node in a VoIP environment. The method includes the following steps: (a) registering at least one pre-configured VoIP node of one of the plurality of gateways as part of a Hunt group with at least one registration entity, (b) receiving incoming call to a VoIP node, (c) sending INCOMING CALL Call back message and playing ring tone if predetermined conditions are satisfied, and (d) opening media channel and connecting incoming call if incoming call is answered before timeout period expires. The steps are performed without a proxy or central controller for data packet transmission, and the remaining of the at least one VoIP nodes coupled to each of the plurality of gateways need not register with the registration entity.

In another aspect, some embodiments provide a method for implementing Hunt group function among a plurality of gateways, each of the plurality of gateways coupled to at least one VoIP node in a VoIP environment. The method includes the following steps: (a) registering at least one pre-configured VoIP node of the at least one gateway as part of the Hunt group with at least one registration entity, (b) receiving new incoming call by the pre-configured VoIP node, (c) sending INCOMING CALL Call back message and playing ring tone if predetermined conditions are satisfied, and (d) opening media channel and connecting incoming call if incoming call is answered before timeout period expires. The steps are performed without a proxy or central controller for data packet transmission, and the remaining of the at least one VoIP nodes coupled to each of the plurality of gateways need not register with the registration entity.

In yet another aspect, some embodiments provide a system for implementing Hunt group function in a VoIP environment. The system includes a plurality of gateways, at least one VoIP node coupled to each of the plurality of gateways, and at least one pre-configured VoIP node of the plurality of gateways for registering as part of a Hunt group with a registration entity. A proxy or central controller is not used for data packet transmission, and the remaining of the at least one VoIP nodes coupled to each of the plurality of gateways need not register with the registration entity.

As will be appreciated by those skilled in the art, functions and systems described herein as being implemented in software, firmware, hardware, or a combination thereof can also be implemented in any of the other formats. For example, functions and systems described as being implemented in software can also be implemented in firmware, hardware, or a combination of software, firmware, and/or hardware.

This present embodiment considers a system and method for implementing the Hunt group function without using any proxy functionalities. The Hunt group function of the present embodiment is advantageously independent of the signaling protocol being used by VoIP terminals. Furthermore, there is advantageously no need of any special or proprietary signaling protocol to be implemented.

In fact, it is recommended that the Hunt group functionality of the present embodiment be in compliance with existing standards such as H.323 for an endpoint or Session Initiation Protocol (SIP) for a User Agent (UA).

Instead of all members or VoIP nodes in the Hunt group registering with a registration entity and having a Hunt group number in addition to their usual peer-to-peer number, at least one pre-configured VoIP node in the Hunt group would perform the registration and be registered with the Hunt group number. All other VoIP nodes will be registered with the usual peer-to-peer number to initiate or receive the normal peer-to-peer outgoing or incoming call respectively. All incoming calls to the Hunt group will be directed by the gateway to the pre-configured VoIP node first. A software implementable method performed by the gateway will ensure that the incoming call is forwarded to a VoIP node within the Hunt group.

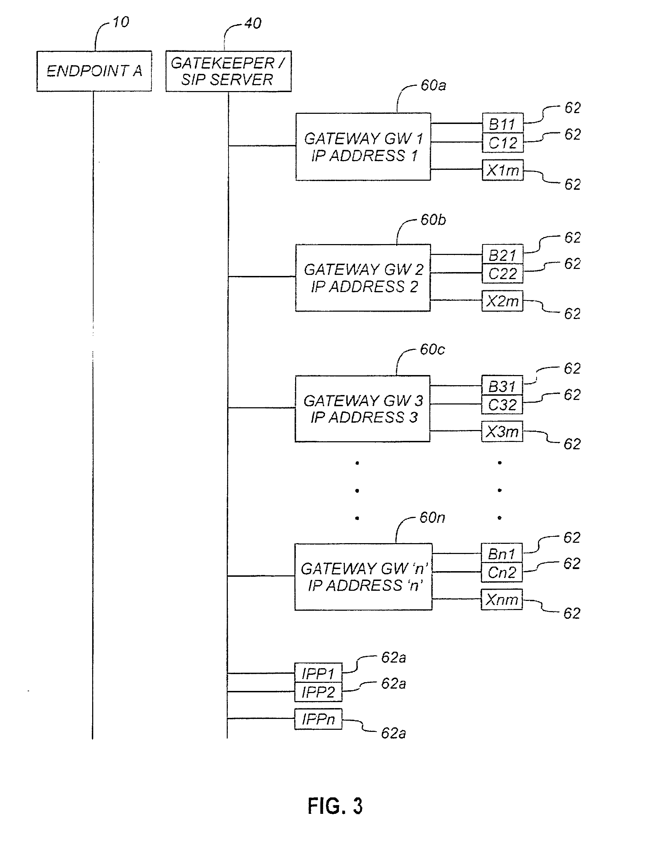

Referring to FIG. 3, a system in accordance with the present embodiment is shown. The system comprises a plurality of multi-channel gateways 60*i* (i.e., each denominated by one of 60a-60n) making up members of a Hunt group, the multi-channel gateways 60i being further coupled to a plurality of VoIP nodes 62. There are no limits to the number of nodes connected to a multi-channel gateway 60i and is only dependent on the processing capabilities of the gateway 60i.

The system further comprises individual VoIP nodes 62 that may be individual IPPhones 62a. These individual VoIP nodes 62 may further be considered to be single-channel gateways 60i. References to "gateways" hereinafter are not limited to single-channel nor multi-channel gateways nor individual IPPhones 62a.

The VoIP nodes 62 may be SIP UAs when considering SIP protocol or H.323 endpoints when considering H.323 protocol. The VoIP nodes 62 in the present embodiment may join or leave a particular Hunt group anytime and may continue to accept or place VoIP calls as per normal.

Furthermore, instead of registering all members or all VoIP nodes 62 belonging to a Hunt group to a registration entity, only one pre-configured VoIP node 62 belonging to the particular hunt group need to be registered. All other VoIP nodes will be registered with the usual peer-to-peer number to initiate or receive the normal peer-to-peer outgoing or incoming call respectively. When considering H.323 protocol, the registration entity would be a H.323 gatekeeper, while in SIP protocol, the registration entity would be a SIP server.

The pre-configured VoIP nodes 62 may register with the registration entity using one of two possible modes: 1) individual registration mode or 2) gateway registration mode.

In the individual registration mode, the pre-configured VoIP node 62 coupled to a single gateway registers an IP Address similar to other VoIP nodes 62 coupled to the same gateway but with different port numbers. In the gateway registration mode, each of the gateways 60i registers with a single IP address and single port number and then distributes incoming packets to respective VoIP nodes 62 based on E.164 phone numbers or H.323 aliases when considering H.323 protocol or SIP URI when considering SIP.

Referring further to FIG. 3, Gateway GW1 60a has IP Address 1 and is connected to the VoIP nodes 62 represented by B11 and C12 etc. Similarly, Gateway GW 2 60b has IP Address 2 and is also connected to the VoIP nodes 62 represented by B21 and C21 etc.

Individual IPPhones 62a represented by IPP1 and IPP2 are individual VoIP endpoints that are also present in the network. Each of the VoIP nodes 62 represented by B11, C12, C13 and, B21, C21 and IPP1, IPP2 are represented by separate instances of the signalling stack. These VoIP nodes 62 or instances can be referred to by their respective Instance IDs. Other additional information about these VoIP Nodes 62 such as "phone_number", "call_state" (busy, free), "HuntLineEnable" flag are maintained by their respective gateways and can be accessed with the help of their respective Instance IDs. "HuntLineEnable" is a hunt group flag indicating whether that VoIP node 62 wishes to be part of the Hunt group and may be ENABLED or DISABLED. "Call_state" indicates the call state of the VoIP node 62 as in whether it is BUSY or FREE.

As discussed earlier, not all of the VoIP nodes 62 that wish to be a part of the Hunt group need to be registered to a Gatekeeper or a SIP server using the group transport alias address. Only one pre-configured VoIP node 62 will need to register to the Gatekeeper with a Hunt group number as well as its own normal phone number used for peer-to-peer calls. All other VoIP nodes will be registered with the usual peer-to-peer number to initiate or receive the normal peer-to-peer outgoing or incoming call respectively.

The VoIP nodes 62 participating in the Hunt group function however need to all ENABLE the Hunt group flag "HuntLineEnable" which acts as an identifier for being a member of the Hunt group. When there is an incoming call for the hunt group, the call is first routed to the earlier preconfigured VoIP node 62. The gateways 60i should not be confused for a "proxy" as these gateways do not necessarily relay data packets on behalf of other gateways or VoIP nodes 62. Notably, these gateways 60*i* assist in hunting or searching for an available VoIP node 62, amongst the other VoIP nodes 62 connected to it. All the gateways 60i will implement a method of the present embodiment to perform the Hunt group functions and the routing of the calls to other free and available VoIP nodes 62.

When the incoming call is a peer-to-peer call directed to member of the Hunt Group, the Hunt group flag is then the factor which decides how the call is to be treated. If the Hunt group flag is ENABLED, the incoming call is treated like a Hunt group call and if the Hunt group flag is DISABLED, it is treated as a normal peer-to-peer call.

The method in accordance with the present embodiment may be implemented by way of a software plug-in residing in the gateways belonging to the Hunt group.

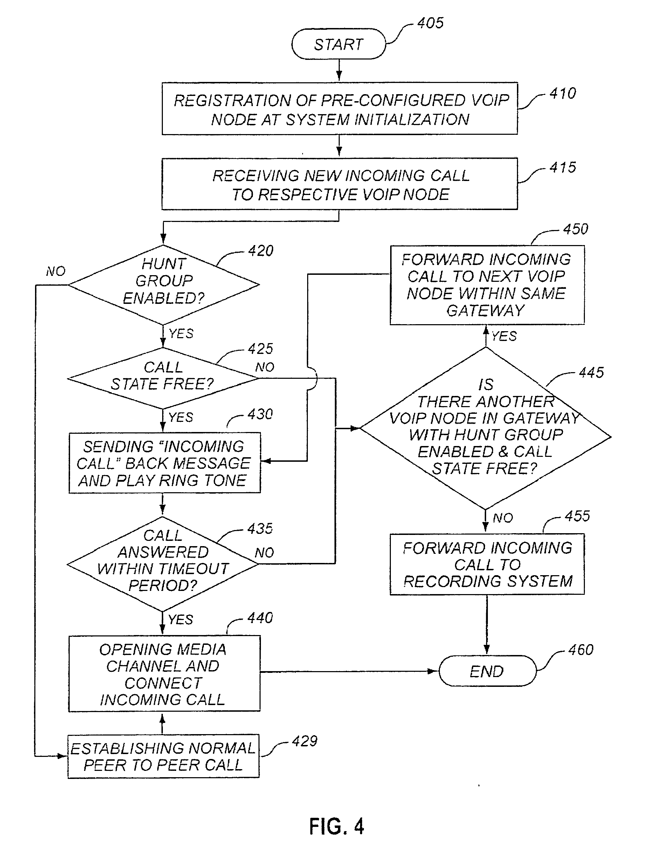

Referring to FIG. 4, the method for implementing Hunt group function among a plurality of gateways starts with the step of registering 410 a pre-configured VoIP node 62 with the registration entity at system initialization of the gateways 60i.

New incoming call to a respective VoIP node 62 is received 415 where the incoming call is directed at either an instance ID belonging to the Hunt group number or for a peer-to-peer number for the respective VoIP node 62. After which, two predetermined conditions: a Hunt group flag and a Call state of the VoIP node 62 are checked by the gateway 60*i*. If the Hunt group flag is ENABLED 420 and the Call state is FREE 425, then an "incoming_call" call back message is sent 430 to the gateway 60*i* with the instance ID of the VoIP node for which the incoming call is received and a "Ring Tone" is played on the particular VoIP node 62 to indicate a new incoming call. If the incoming call is answered 435 within a predetermined time-out period, media channels are opened 440 and the incoming call is connected.

If the Hunt group flag is ENABLED 420 but the Call state is BUSY 425 or if the incoming call is not answered before the predetermined time-out period 435 has expired, a next 445 VoIP node 62 in the same gateway 60*i* in the Hunt group is considered and checked if the Hunt group flag is ENABLED and if the Call state is FREE. If there are no other VoIP nodes 62 satisfying both the two predetermined conditions in the same gateway 60*i*, the incoming call is forwarded 455 to a Recording System.

If there are other VoIP nodes 62 satisfying both the two predetermined conditions, the incoming call is then forwarded 450 to these VoIP nodes 62. The flow of the method 400 then starts at the step of sending 430 "Incoming Call" back message and playing ring tone.

If the Hunt group flag is DISABLED 420, the incoming call is treated as a non Hunt group call and a normal peer-to-peer call is established 429, media channels are opened 440 and the incoming call is connected.

The Recording system can be considered to be the last node of all the gateways and is configured with the phone number for forwarding to the first VoIP node 62 in a next gateway. If there is no Recording system available as in the example of a single channel gateway 60*i* or single IPPhone, the single channel Gateway 60*i* itself is configured to forward to the first VoIP node 62 of the next gateway 60*i*.

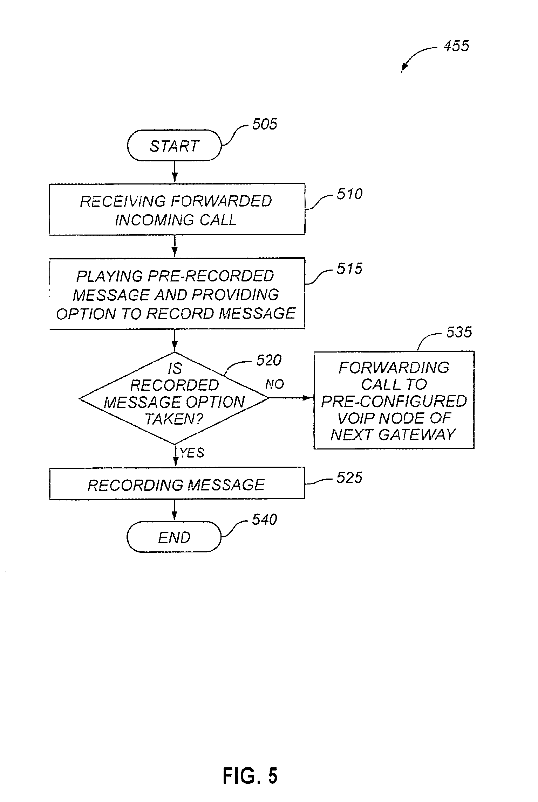

Referring to FIG. 5, the step of forwarding 455 the incoming call to the Recording system further starts with the step of receiving 510 the forwarded incoming call from the gateway 60*i*. The Recording system may be adapted to play 515 a message and provide options for the user to record a message. An example of the played message may be, "Press 1 to record your message or continue to hold to speak to next available line". If the user chooses to take 520 the record message option, the forwarded call is terminated and the recording system activated to record 525 the user's message.

If however, the user chooses not to take 520 the record message option, the call is forwarded to the first VoIP node 62 of the next gateway 60*i* in the same Hunt group. The next gateway 60*i* will perform the method 400 starting at the step of sending 415 incoming call to the pre-configured VoIP node and go through the same algorithm again to attempt to establish the call to a next member of the Hunt group.

All the VoIP nodes 62 that do not wish to be part of the Hunt group may disable the Hunt group flag "HuntGroupEnable". If the gateway finds the "HuntLineEnable" flag DISABLED, then the incoming call to the "Hunt Group" is never forwarded to that VoIP node 62.

These VoIP nodes 62 behave normally like other VoIP endpoints for the peer-to-peer calls direct to them regardless of whether they are part of the Hunt Group. But if any of the VoIP nodes have the "HuntLineEnable" flag DISABLED and enabled the normal call forwarding to the VoIP node that have the "HuntLineEnable" flag ENABLED, then the same method 400 starting at the step of 425 of the present embodiment is performed.

The algorithm of the method 400 may be represented by the following pseudo code:

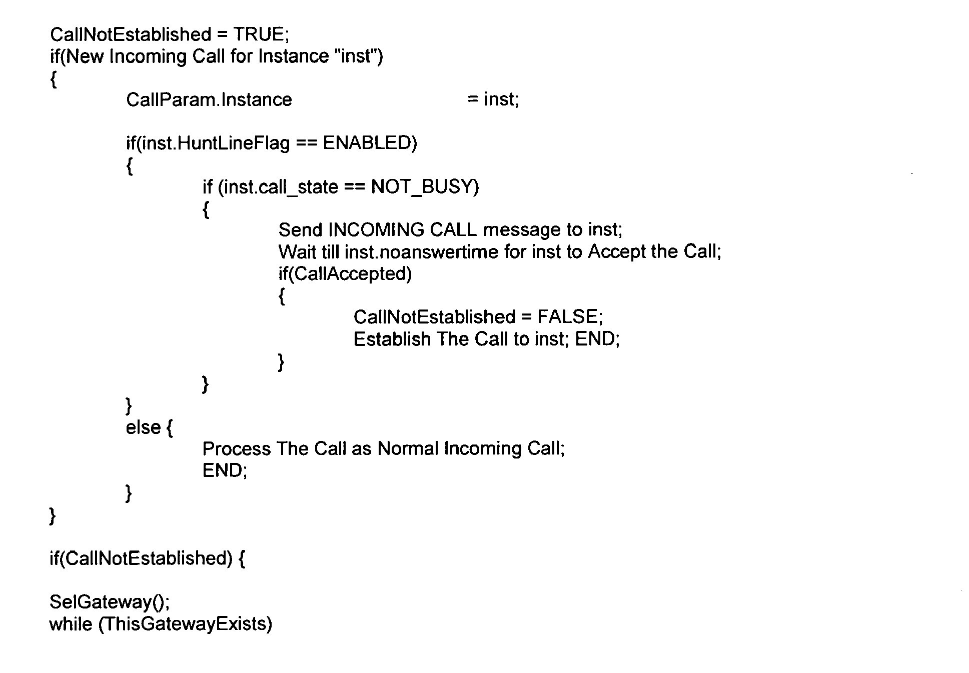

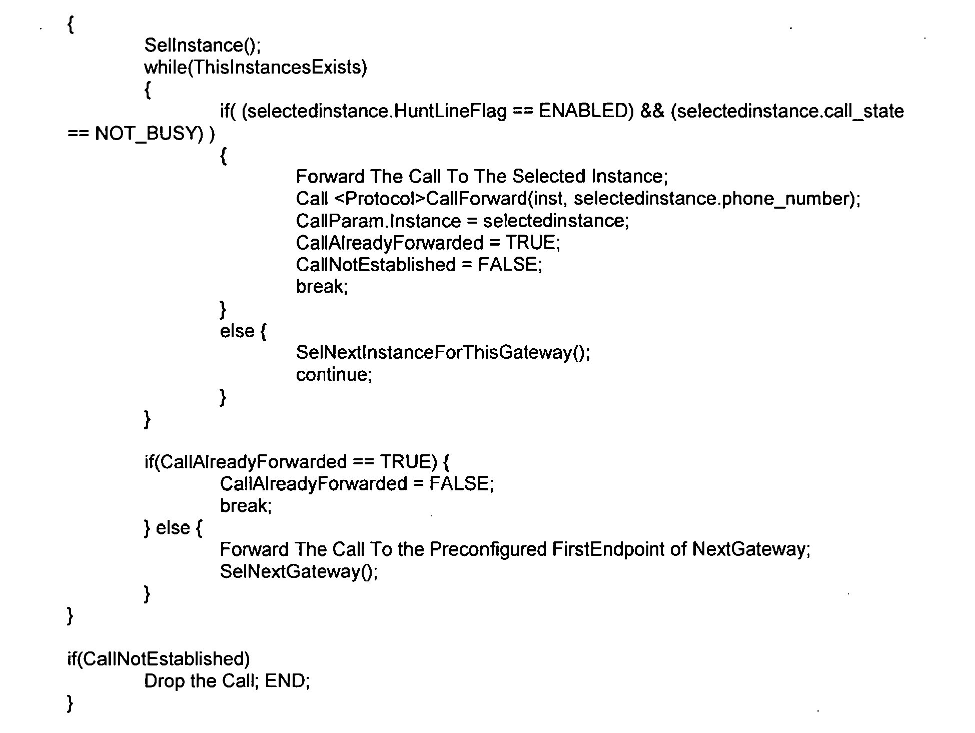

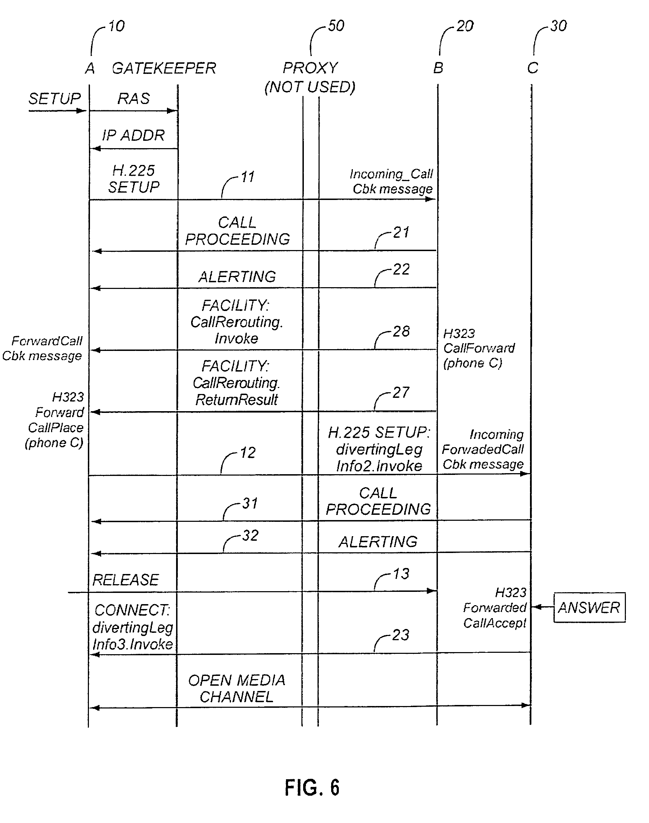

Referring to FIG. 6, shows the Hunt group functionality in accordance with the present embodiment implemented using H.323 protocol. The message flow is implemented without the use of any proxy or central controllers. Endpoint A 10 calls the line group comprising of Endpoint B 20 and C 30. This present example uses the H.323 protocol but the signaling protocol is not a limitation and may be implemented with any VoIP protocols like SIP.

When Endpoint A 10 calls Endpoint B 20 which is a member of the Hunt group, End point B 20 responds with Call Proceeding 21 and Alerting 22 messages. Also, Incoming Call callback message according to H.225 Setup message 11 is sent to the Gateway 60*i* to indicate a new incoming call.

Assuming that Endpoint B 20 does not answer the incoming call, after a predetermined timeout period, the incoming call is forwarded to a next endpoint or VoIP node 62 in the Hunt group. The gateway 60*i* checks the availability of the next VoIP node 62 using the method 400 of the present embodiment.

When the gateway 60*i* finds the next Call State free VoIP node 62 with "HuntLineEnable" flag ENABLED, it invokes a H.323CallForward API 28 with the phone number of that next VoIP node 62. The call is forwarded using the existing protocols like H.450.3 Call Forwarding ITU-T standard for H.323. Endpoint B responds with Call Rerouting Invoke 28 message along with the phone number for the next member in the hunt group: Endpoint C 30 in the illustrated case.

On receiving this message, Endpoint A 10 sends a Call Rerouting ReturnResult 27 message to indicate success or failure. Assuming it is successful, it sends a H.225 Setup 12 message to Endpoint C 30 with divertingLegInfo2 Invoke PDU to indicate that it is a forwarded call and not a normal peer-to-peer incoming call. On receiving this message, Endpoint C 30 responds with Call Proceeding 31 and Alerting 32 messages to Endpoint A 10. Endpoint A 10 then sends a Release Complete 13 message to drop the existing call with Endpoint B 20.

If Endpoint C 30 answers the call, then a CONNECT 23 message is sent to Endpoint A 10 with divertingLegInfo3 invoke PDU. If Endpoint C 30 is busy then the call is forwarded to the next member in the hunt-group in a similar above described manner.

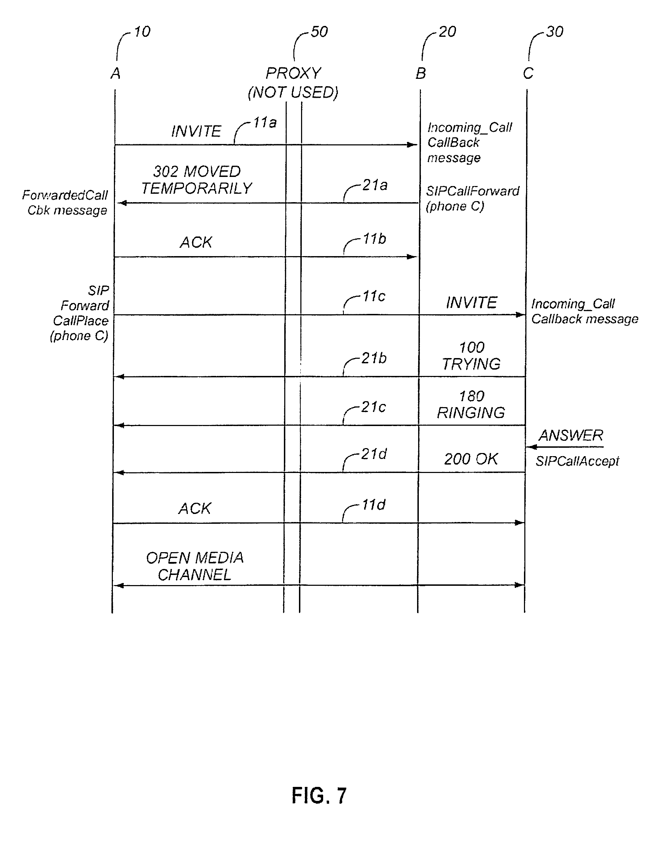

Referring to FIG. 7, shows the Hunt group functionality in accordance with the present embodiment implemented using SIP protocol. The message flow is implemented without the use of any proxy or central controllers.

In the present example, Endpoint A 10 calls the Hunt group comprising of Endpoint B 20 and C 30. When Endpoint A 10 calls Endpoint B 20, Endpoint A 10 sends INVITE 11a message to Endpoint B 20. Upon receiving the INVITE 11a message, the SIP signaling protocol stack sends an Incoming_Call callback 11a message to the gateway 60i to indicate a new incoming call.

Assuming that Endpoint B 20 does not answer the call, then after a predetermined timeout period, the call is forwarded to the next available endpoint. The gateway 60i checks the availability of the next available VoIP node. When the gateway 60*i* finds the next Call state free VoIP node 62 with "HuntLineEnable" flag enabled, it invokes the SIPCallForward API 21a with the phone number of that particular VoIP node 62.

Upon invoking this API, Endpoint B 20 sends a 302 Moved Temporarily 21a message with the SIP Contact Header containing the SIP URI address for the next available VoIP node in the Hunt group. The call is forwarded using the existing standard for Call Forwarding mechanism in RFC 3261 for SIP.

Endpoint A 10 on receiving the 302 Moved Temporarily 21 a message response, redirects the INVITE 11c message to Endpoint C 30. If Endpoint C 30 is not busy, then it responds with 100 Trying 21b and 180 Ringing 21c message. When Endpoint C 30 answers the call, a 200 OK 21d message is sent to Endpoint A 10. Endpoint A 10 acknowledges using an ACK11d message. Subsequently the media information is negotiated and media channels are opened to establish the call.

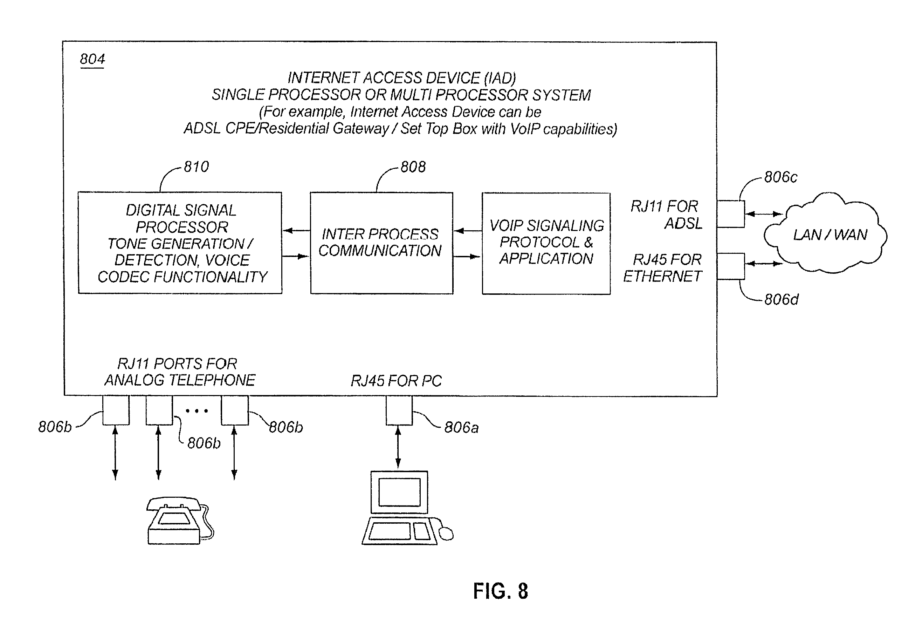

FIG. 8 illustrates a system in accordance with some embodiments of the present invention. The system 802 can be a single-processor or multi-processor system and includes an internet access device (IAD) 804 with voice over internet protocol (VoIP) signaling protocol and application capabilities. The internet access device 804 includes at least one communications interface. IAD 804 also includes a Digital Signal Processor (DSP) to perform the voice codec, tone detection, and tone generation functionality. In a single processor IAD solution the DSP functionality and the VoIP signaling functionality can be implemented on the same processor. Alternately, in a multiprocessor IAD solution, these functionalities can be divided among different processors. FIG. 8 shows several communication interfaces 806A - 806D used in the Internet Access Device. Communication interface 806A can be used by a PC to enable the user to connect to Internet. An analog phone when connected to interface 806B is enabled to function as Voice over IP phone and, depending on the number of channels supported by the Internet Access Device 804, more than one analog phone can be connected to this interface 806B. Communication interface 806C and 806D can be used to connect to a LAN/WAN using, respectively, ADSL or Ethernet interface. The messages received by the VoIP signaling protocol 807 are communicated using an inter process communication component 808 to a digital signal processor 810.

The present embodiment thus advantageously allows the implementation of proxy independent hunt group function in a VoIP environment. There is advantageously no need for any special or proprietary signaling protocol to be implemented and the present embodiment advantageously utilizes existing standards such as H.323 or SIP.

Only one pre-configured VoIP node in the Hunt group would need to be registered with the Hunt group number. All incoming calls to the Hunt group will be directed by the gateway to the pre-configured VoIP node first. The method of the present embodiment performed by the gateway will ensure that the incoming call is forwarded to a VoIP node within the Hunt group.

While this detailed description has set forth some embodiments of the present invention, the appended claims will cover other embodiments of the present invention which differ from the described embodiments according to various modifications and improvements. For example, embodiments of the present invention are described in connection with the International Telecommunications Union's H.323 and the Internet Engineering Task Force's Session Initiation Protocol (SIP) standards. However, embodiments of the present invention implemented in connection with other standards, such as Cisco's Skinny Client Control Protocol or the Internet Engineering Task Force's Media Gateway control protocol (MGCP) or Megaco (H.248), would also be within the scope of the appended claims.

The numbering of steps in the appended method claims does not indicate that the steps must be performed in any particular order.

## Claims

1. A method for implementing a Hunt group function among a plurality of gateways, each of the plurality of gateways coupled to at least one VoIP node in a VoIP environment, the method comprising the steps:
a) registering at least one pre-configured VoIP node of one of the plurality of gateways as part of a Hunt group with at least one registration entity;
b) receiving an incoming call to a VoIP node;
c) sending an INCOMING CALL Call back message and playing a ring tone if predetermined conditions are satisfied; and
d) opening media channel and connecting the incoming call if the incoming call is answered before timeout period expires;
wherein the steps are performed without a proxy or central controller for data packet transmission; and
further wherein any remaining of the at least one VoIP nodes coupled to each of the plurality of gateways need not register with the registration entity.

2. A computer program product for implementing Hunt group function among a plurality of gateways, each of the plurality of gateways coupled to at least one VoIP node in a VoIP environment, the computer program product comprising a computer readable medium including instructions for performing the following steps:
a) registering at least one pre-configured VoIP node of one of the plurality of gateways as part of a Hunt group with at least one registration entity;
b) receiving incoming call to a VoIP node;
c) sending INCOMING CALL Call back message and playing ring tone if predetermined conditions are satisfied; and
d) opening media channel and connecting incoming call if incoming call is answered before timeout period expires;
wherein the steps are performed without a proxy or central controller for data packet transmission; and
further wherein any remaining of the at least one VoIP nodes coupled to each of the plurality of gateways need not register with the registration entity.

3. A system for implementing a Hunt group function in a VoIP environment; the system comprising:
a plurality of gateways;
at least one VoIP node coupled to each of the plurality of gateways;
at least one pre-configured VoIP node of the plurality of gateways for registering as part of a Hunt group with a registration entity;
wherein a proxy or central controller is not used for data packet transmission; and
further wherein the remaining of the at least one VoIP nodes coupled to each of the plurality of gateways need not register with the registration entity.

4. The system according to claim 3, wherein a recording system may be coupled to each of the plurality of gateways.

5. A system with Internet access capabilities and voice over internet protocol (VoIP) capabilities comprising:
at least one voice codec processor;
a voice over internet protocol VoIP and application module;
at least one communications interface, configured to access the Internet and make VoIP calls simultaneously; and
a computer program product for implementing a Hunt group function among a plurality of gateways, each of the plurality of gateways coupled to at least one VoIP node in a VoIP environment, the computer program product comprising a computer readable medium, operably associated with the at least one processor and with the VoIP protocol and application module, comprising instructions for performing the following steps:
a) registering at least one pre-configured VoIP node of one of the plurality of gateways as part of a Hunt group with at least one registration entity;
b) receiving an incoming call to a VoIP node;
c) sending an INCOMING CALL Call back message and playing a ring tone if predetermined conditions are satisfied; and
d) opening media channel and connecting the incoming call if the incoming call is answered before timeout period expires;
wherein the steps are performed without a proxy or central controller for data packet transmission; and
further wherein any remaining of the at least one VoIP nodes coupled to each of the plurality of gateways need not register with the registration entity.

6. The system according to claim 5, wherein the system includes a device selected from the group consisting of set-top box, residential gateway, asymmetric digital subscriber line customer premise equipment (ADSL CPE), and VoIP telephone.

7. The method or program product or system according to any preceding claim,
wherein the predetermined conditions are:
c1) Hunt group flag ENABLED; and
c2) Call State FREE.

8. The method or program product or system according to any preceding claim,
wherein remaining of the at least one VoIP nodes coupled to each of the plurality of gateways may leave the Hunt group by setting the or a Hunt group flag to DISABLED.

9. The program product or system according to claim 7 or 8, wherein the computer readable medium further includes instructions for performing the following step:
c11) establishing normal peer-to-peer call.

10. The method according to claim 7 or 8, further comprising the step:
c11) establishing normal peer-to-peer call.

11. The program product or system according to claim 7 or any claim appended thereto, wherein the computer readable medium further includes instructions for performing the following steps if the pre-configured VoIP node does not satisfy the predetermined condition of c2) or if the incoming call is NOT answered before timeout period expires:
e) forwarding incoming call to next VoIP node in the one of the plurality of gateways if another VoIP node satisfying the predetermined conditions exists in the one of the plurality of gateways; and
f) forwarding incoming call to a recording system of the one of the plurality of gateways if there are no more VoIP nodes in the one of the plurality of gateways if another VoIP node satisfying the predetermined conditions does not exist in the one of the plurality of gateways.

12. The method according to claim 7 or any claim appended thereto, wherein if the pre-configured VoIP node does not satisfy the predetermined condition of c2) or if incoming call is NOT answered before timeout period expires, the method further comprises the steps:
e) forwarding incoming call to next VoIP node in the one of the plurality of gateways if another VoIP node satisfying the predetermined conditions exists in the one of the plurality of gateways; and
f) forwarding incoming call to a recording system of the one of the plurality of gateways if there are no more VoIP nodes in the one of the plurality of gateways if another VoIP node satisfying the predetermined conditions does not exist in the one of the plurality of gateways.

13. The method or program product or system according to claim 11 or 12, wherein step f) further comprises:
f1) receiving forwarded incoming call;
f2) playing pre-recorded message and providing options for recording messages; and
f3) recording message if record message option is taken.

14. The program product or system according to claim 13, wherein the computer readable medium further comprises instructions for performing the following step:
f4) forwarding forwarded incoming call to next VoIP node of another of the plurality of gateways.

15. The method according to claim 13, further comprising the steps:
f4) forwarding forwarded incoming call to next VoIP node of another of the plurality of gateways.

16. The method or program product or system according to any preceding claim, wherein the VoIP Nodes are selected from the group consisting of H.323 endpoints and SIP User Agents.

17. The method or program product or system according to any preceding claim, wherein the at least one registration entity is selected from the group consisting of H.323 gatekeeper and SIP server.

18. The method or program product or system according to any preceding claim, wherein the step a) further comprises:
al) registering a single gateway IP address and a single port number.

19. The method or program product or system according to any preceding claim, wherein the step a) further comprises:
a2) registering a Hunt group number and a peer-to-peer number.

20. The method or program product or system of any preceding Claim, wherein the step b) further comprises:
b1) receiving a new incoming call by the pre-configured VoIP node.
